(19) Europäisches Patentamt
European Patent Office
Office européen des brevets

(11) EP 0 363 893 B1

## (12) EUROPEAN PATENT SPECIFICATION

(45) Date of publication and mention
of the grant of the patent:
**18.02.1998 Bulletin 1998/08**

(51) Int Cl.⁶: **D07B 1/06**, B60C 9/00

(21) Application number: **89118787.4**

(22) Date of filing: **10.10.1989**

(54) **Steel cord and tire reinforced with the same**

Stahlseil und damit verstärkter Reifen

Corde en acier et pneumatique renforcé par cette corde

(84) Designated Contracting States:
**DE FR GB IT**

(30) Priority: **11.10.1988 JP 256764/88**

(43) Date of publication of application:
**18.04.1990 Bulletin 1990/16**

(73) Proprietor: **TOKUSEN KOGYO COMPANY LIMITED**
**Sumiyoshi-cho Ono Hyogo (JP)**

(72) Inventor: **Miyawaki, Hisamune 129-Banchi-no-8 Miki Hyogo (JP)**

(74) Representative: **Lange, Gerd, Dipl.-Ing.**
**Patentanwalt,**
**Nachtigallenweg 8**
**32425 Minden (DE)**

(56) References cited:
**EP-A- 0 366 475**          **GB-A- 2 081 765**

- **PATENT ABSTRACTS OF JAPAN vol. 9, no. 7 (M-350)(1730) 12 January 1985 & JP-A-59 156 805 ( YOKOHAMA GOMU K.K. )**

**Description**

BACKGROUND OF THE INVENTION

Field of the invention:

This invention relates to a steel cord of novel twist construction for use as reinforcing materials for automobile tires, conveyor belts, etc. and a tire using such steel cords as reinforcing materials.

Description of the prior art:

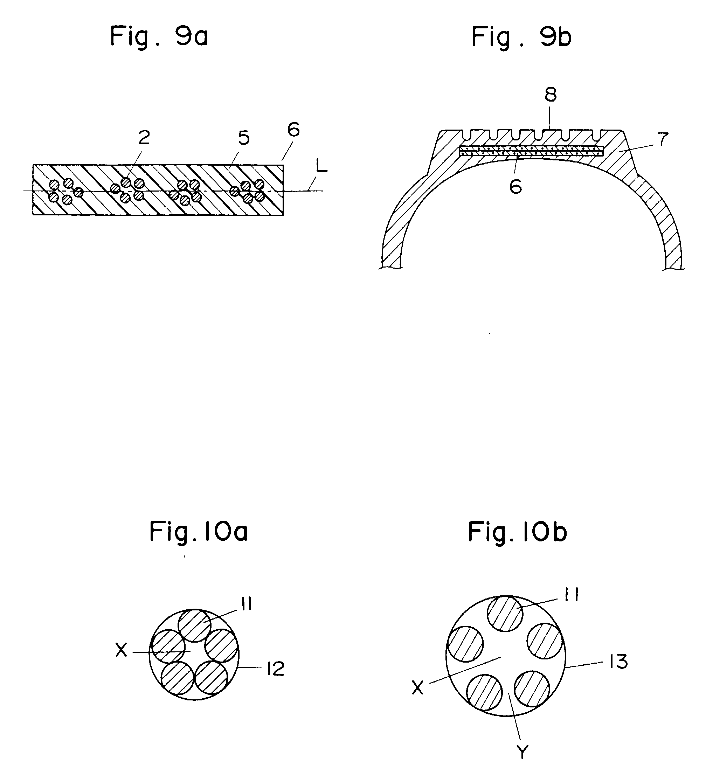

Conventionally, steel cords composed of four or five metal wires intertwisted, namely, of the construction of 1 x 4 or 1 x 5, have been used for a reinforcing layer of a belt part of steel radial tire. However, as shown in Fig. 10a, since a steel cord (12) of 1 x 5 construction, for example, is composed of five metal wires (11) twisted together closely to each other, when a tire is formed rubber does not penetrate into a cavity (X) at the central part of a steel cord and thus the cavity (X) is left continously in the lengthwise direction of the steel cord. Accordingly, in the case of tires using such steel cords, when the tire was damaged externally during the running of an automobile water penetrates into the cavity (X) of the steel cord through cracks and further penetrates in the lengthwise direction of the steel cord, causing rusting of the steel cord and lowering of adhesiveness between the steel cord and rubber. Thus, the so-called "separation phenomenon" (steel cord and rubber are separated from each other) occurs and a usable life of a tire is shortened to a large extent. In order to prolong a usable life of automobile tires and to make tires lighter in weight, it has been required recently to improve corrosion resistance and break-resistance of steel cords. Also, the so-called "open cord" with improved adhesiveness between steel cord and rubber by making rubber penetrate deeply into the steel cord has been developed.

A steel cord of the open type is shown in Fig. 10b. That steel cord (13) is substantially circular in cross section and is composed of five metal wires (11) intertwisted in such a fashion that a clearance (Y) exists between the metal wires.

Another sample of an 1 x 5 steel cord of the open type having a cross section of substantially elleptical shape is known from JP-A-1-59-156 805. The ratio between the longer diameter and the shorter diameter of the elleptical shape is within a range of 1.1 to 2.2. That known elleptical steel cord is twisted in such a way that the orientation of the elleptical shape is always changing in cross sections set along the center line of the steel cord.

The above-mentioned steel cords of the open type have large free spaces between each of their metal wires to allow movement of the metal wires, but when forming tires with an reinforcement of such steel cords said free spaces are reduced due to tension applied to the steel cord, with the result that rubber cannot penetrate fully into the steel cord and adhesiveness between metal wire and rubber is lowered. Moreover, at the time of vulcanizing rubber, metal wires of the above-mentioned steel cord are elongated with a central axis of cord as axial center as they are turned by tensile strength due to flowing of rubber melted or softened by heating or by twisting force loaded in the lengthwise direction of the steel cord and clearances between metal wires are reduced. Thus, rubber cannot penetrate fully into the steel cord, causing corrosion and "separation phenomenon" of steel cord and shortening the usable life of tires.

When a tire runs on pebbles, carbstone or the like, steel cords are liable to break. In order to improve break-resistance of steel cords, it has been suggested to use the so-called "high elongation cord" (steel cord to give a high elongation to a belt part of tire) and at the present time, steel cords of plural layers twisting (twist construction of 3 x 7, 4 x 2, 4 x 4, etc.) and smaller twist pitch are used for belt parts of tires for trucks and buses as steel cords of high elongation. Also, steel cords of single layer twisting (1 x 4, 1 x 5, etc.) are used.

However, the above steel cords of plural layers twisting have such disadvantages as low productivity and high manufacturing cost due to small twist pitch and plural twisting. In the case of steel cords of single layer twisting, they have such disadvantages that elongation at break is low (2.5 - 3.8%) and effect of elongation cannot be expected as high elongation cord.

SUMMARY OF THE INVENTION

An object of the present invention is to stabilize a twist construction of steel cord, to improve penetrability of rubber at the time of covering a steel cord with rubber and to improve corrosion resistance of steel cords. Where necessary, high elongation of more than 5% is given to steel cords so as to improve break-resistance of steel cords.

Another object of the present invention is to prolong the usable life of tires by improving durability of rubber reinforcements and to reduce the weight of tires by reducing the thickness of a belt part of a tire.

In order to attain the above objects, in the present invention the steel cord is twisted in such a way that the orientation of the elliptical shape is always the same in each cross section set along the center line of the steel cord and that in all the said cross sections,the ones of metal wires near the ends of the longer diameter of the elliptical shape are positioned close to each other or contact with each other and the metal wires near the ends of the shorter diameter of the elliptical shape are separated from each other by at least one gap to allow rubber to penetrate into the center of the steel cord.

Preferred embodiments of the invention are defined in the claims 6 to 7.

The above steel cord according to the present invention has good stability in twist construction and shows a slight reduction in gaps at the time of covering the cord with rubber, namely, ample penetration of rubber into the central part of cord. Good penetration of rubber into between metal wires composing a steel cord brings about very good adhesiveness between the cord and the rubber and can prevent corrosion of cords and "separation phenomenon" between the rubber and the cord. Also, a high elongation (more than 5% as in the case of plural layers twisting) is obtained from a single layer twisting.

The above steel cord imparts good wear-resistance and break-resistance to tires and allows rubber to penetrate into the central part of the cord because of gaps between metal wires being unaffected by external force, with the result that metal wires are prevented from corrosion and the usable life of tires is improved to a large extent.

Since the above steel cord is of single twist construction, it can be manufactured at a cheaper cost than the steel cord of plural layers twist construction.

In the case where the above steel cord is used for compounds with rubber or tires, durability is improved to a large extent. Accordingly, use of the above steel cord for tires improves the usable life of tires, prevents tires from bursting and improves the safety during running of an automobile. Also, since the above steel cord is in elliptical shape and a longer diameter or a shorter diameter of the ellipse is in the same direction on the plane basis, it is possible to lessen the thickness of tire by arranging the shorter diameter axis side in the direction of thickness of rubber of tire. Thus, lighter weight of tires can be realized.

## BRIEF DESCRIPTION OF THE DRAWING

The nature and advantages of the present invention will be understood more clearly from the following detailed description of the invention made with reference to the accompanying drawings, in which:

Fig. 1a is a plan view of a steel cord according to Embodiment 1;
Fig. 1b is a front view of the steel cord shown in Fig. 1a;
Fig. 1c (A)~(L) are cross sections, taken along lines A-A ~ L-L in Fig. la respectively;
Fig. 2 is a cross section of a steel cord according to Embodiment 2;
Fig. 3a is an explanatory drawing of the method of measuring the rate of decrease of gaps in the steel cord;
Fig. 3b is a curve, showing the rates of decrease of gaps measured by the method explained by Fig. 3a;
Fig. 4a is an explanatory drawing of the method of measuring the rate of rubber penetration into a steel cord;
Fig. 4b is a curve, showing the rates of rubber penetration measured by the method explained by Fig. 4a;
Fig. 5a is a plan view of a steel cord according to Embodiment 3;
Fig. 5b is a front view of the steel cord shown in Fig. 5a;
Fig. 5c (A)~(L) are cross sections, taken along lines A-A ~ L-L in Fig. 5a respectively;
Fig. 6a and Fig. 6b are cross sections of a steel cord according to Embodiment 4 at the different position in lengthwise direction of the steel cord;
Fig. 7 is a curve, showing the relation between the twist pitch and the metal wire diameter;
Fig. 8 is a curve, showing the relation between the ratio of a longer diameter to a shorter diameter and the rate of rubber penetration;
Fig. 9a is a cross section of a compound with rubber;
Fig. 9b is a cross section of a main part of a tire for which the compound with rubber shown in Fig. 9a is used; and
Fig. 10a and Fig. 10b are cross sections of conventional steel cords.

## DETAILED DESCRIPTION OF THE INVENTION

(Embodiment 1)

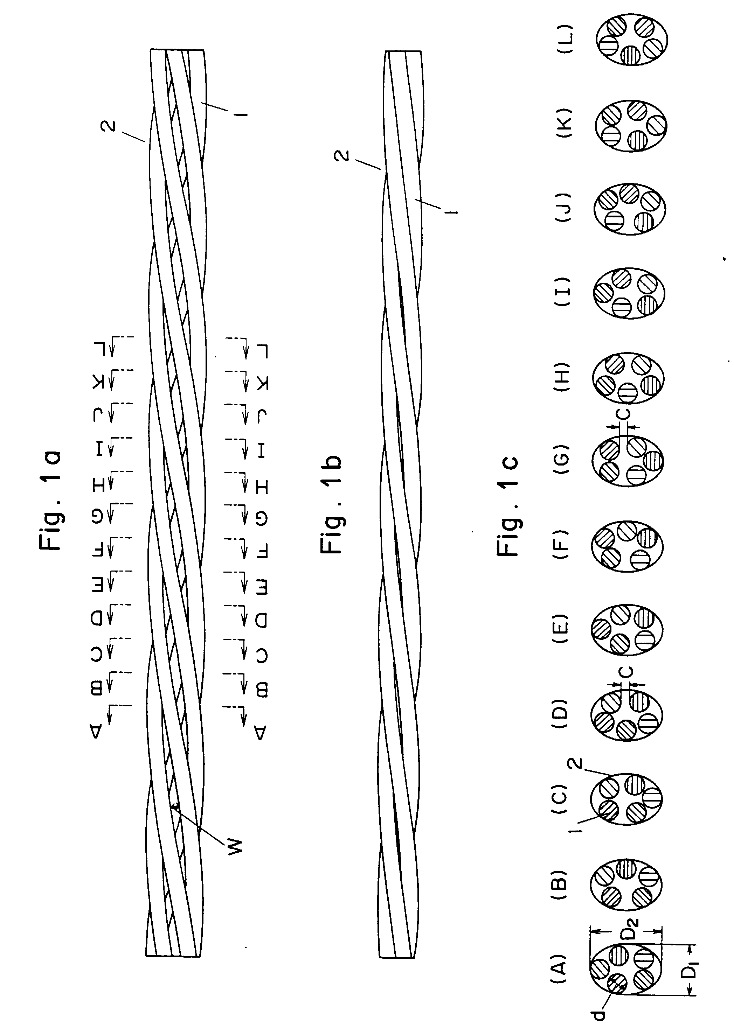

A cord of circular cross section and of single layer twist open construction having 1 x 5 x 0.25 twist was formed by intertwisting five metal wires (1) (each having a diameter d of 25mmϕ and being plated with brass at its surface) in S twist direction and at a twist pitch P of 10mm. Then, by the processing means, such as a roller die, a die having elliptical holes, a corrective roller, etc., the above cord was made into a steel cord (2) in which, as shown in Fig. 1a and Fig. 1b, its circumcircle has a substantially elliptical shape of the same direction in lengthwise direction of the cord, adjoining metal wires (1) positioned at the area of elliptical both ends in longer diameter axis direction substantially contact with each other, the average gap between adjoining metal wires (1) positioned at the other area is 0.11mm and the ratio between a longer diameter $D_2$ and a shorter diameter $D_1$ is about 1.36. The above average gap should preferably be within the range of 0.05~0.25mm.

The above steel cord (2) was so composed that metal wires positioned upwardly and downwardly of the longer diameter axis of the ellipse form a gap of long hysteresis loop-like shape and such gaps exist at substantially regular intervals in the lengthwise direction of a cord. The largest width of the gap W of hysteresis loop-like shape was 0.57 of the metal wire diameter.

(Embodiment 2)

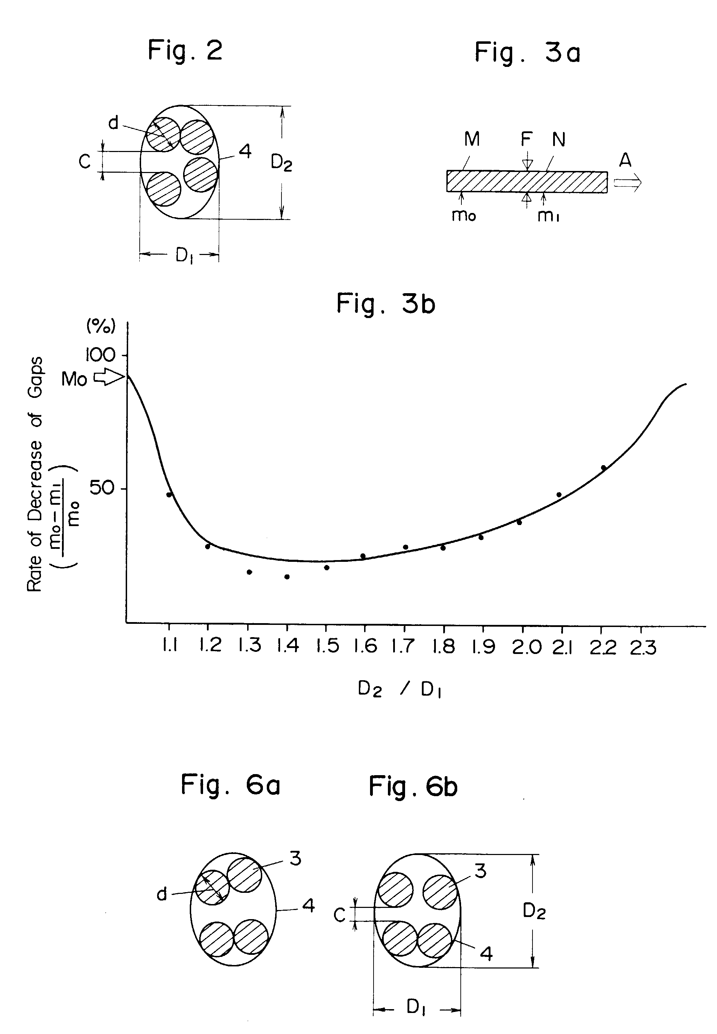

A cord of circular cross section and of single layer twist open construction having 1 x 4 x 0.25 twist was formed by intertwisting four metal wires (3) (each having a diameter d of 0.25mm$\phi$ and being plated with brass at its surface) in S twist direction and at a twist pitch P of 10mm. By drawing the above cord by a die or by pressing it by rollers, the above cord was made into a steel cord (4) in which, as shown in Fig. 2, its circumcircle has a substantially elliptical shape of the same direction in lengthwise direction of the cord, at least adjoining metal wires (3) positioned at one end of the area of elliptical both ends in longer diameter axis direction contact with each other, the average gap between adjoining metal wires (3) in the other area is 0.15mm and the ratio between a longer diameter $D_2$ and a shorter diameter $D_1$ is about 1.4. The above average gap should preferably be within the range of 0.05 ~ 0.25mm.

As the steel cords in the above Embodiments 1 and 2 are substantially elliptical in cross sectional shape and the direction of ellipse is formed continuously in the same direction in lengthwise direction of the cord, even if external force, such as pull strength or drawing strength, is applied to the cord, it was possible to prevent the rotation along the spiral trend of metal wires. Moreover, as metal wires in the area of elliptical both ends in a long diameter axis direction were made to substantially contact with each other and a gap was made between metal wires in the other area, free movement of metal wires by external force could be prevented. Thus, reduction of gaps between metal wires by external pressure caused by flowing of rubber at the vulcanization of rubber could be prevented and penetration of rubber into the cord was improved to a large extent, with resultant improvement of anti-corrosion.

In the above embodiments, a gap C between metal wires in the other area should preferably be more than 0.2 of metal wire diameter. If it is less than 0.2, rubber does not penetrate fully into the cord at the vulcanization of rubber.

The positional relation between adjoining metal wires should preferably be such that the more they approach the both ends part of long diameter axis, the more they are close to each other and the more they approach the both ends part of short diameter axis, the more they are separate from each other.

A preferable ratio between the twist pitch P and the metal wire diameter d is within the range of $30 \leq \frac{P}{d} \leq 80$. If it is less than 30, the twist pitch becomes too short and the manufacturing cost increases. On the other hand, if it exceeds 80, the twist pitch becomes too long and the effect of twist is lost, with the result that the fatigue of steel cord is accelerated. $\frac{P}{d} = 35 \sim 50$ is most preferable.

A preferable ratio between the long diameter $D_2$ and the short diameter $D_1$ is within the range of $1.1 \leq \frac{D_2}{D_1} \leq 2.2$. If it is less than 1,1, the cross section of a cord more resembles a circle and the problem similar to the case of conventional open cord is raised. On the other hand, if it exceeds 2.2, the diameter of cord becomes too large and when cords are arranged in a row in rubber, cords approach each other excessively or contact with each other and if a gap between cords is made large, the number of cords used is reduced, with the result that durability of tire is impeded and thickness of rubber reinforcing material becomes larger. $\frac{D_2}{D_1} = 1.3 \sim 1.6$ is most preferable.

Fig. 3 shows the rates of decrease of gaps measured when steel cords of different $\frac{D_2}{D_1}$ were drawn under a load of 10 kg.

Fig. 3a shows the method of experimenting, namely, the steel cord according to the present invention was pulled in arrow A direction, with a load of 10 Kg. drawing force being applied to the point F. Then, the average gap $m_o$ of the cord at the point M (where no drawing force was applied) and the average gap $m_1$ of the cord at the point N (where drawing force was applied) were measured. The ratio between $m_1$ and $m_o$ or the rate of decrease of gaps was obtained and shown in Fig. 3b.

As is obvious from Fig. 3b, the ratio between a longer diameter $D_2$ and a shorter diameter $D_1$ of the cord should preferably be within the range of $1.1 \leq \frac{D_2}{D_1} \leq 2.2$ and $1.3 \sim 1.6$ is most preferable. In Fig. 3b, $M_o$ shows the level of the rate of decrease of gaps for conventional open cords.

Next, a comparative test was carried out regarding penetrativity of rubber of the steel cord according to the present invention and the conventional open cord.

First, an explanation is made about preparation of test specimens.

Steel cords A, B according to the present invention (each formed by intertwisting five metal wires having the diameter of 0.25mm$\phi$ and plated with brass) having a twist construction of 1 x 5 and the ratio between a longer diameter and a shorter diameter of $\frac{D_2}{D_1} = 1.85$ and $\frac{D_2}{D_1} = 1.2$ respectively and a conventional open cord C were prepared.

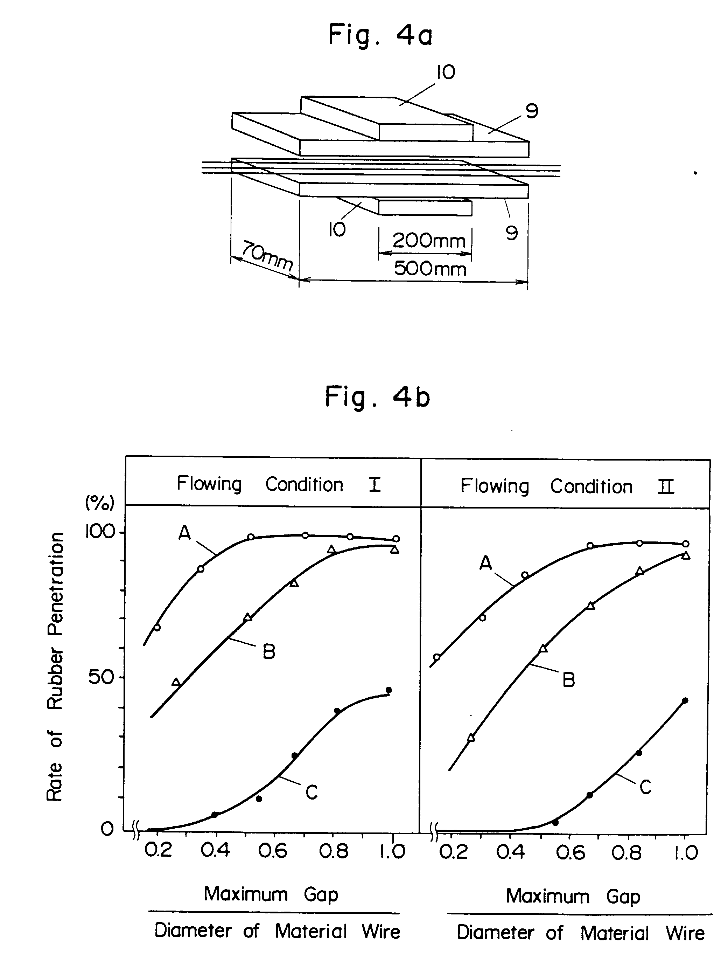

As shown in Fig. 4a, each of these cords was arranged between unvulcanized rubber (9) and each of two kinds of unvulcanized rubber (10) with different thickness was placed at the uppermost surface and at the lowermost surface of the unvulcanized rubber (9) so as to vary the flowing of rubber at the time of vulcanization. In this state, materials were vulcanized for 25 minutes at 150°C, while a pressure of 30Kg/cm$^2$ was being applied from above and from below. Thus, specimens of two different kinds of rubber flowing condition, as shown in the following table, were obtained.

## Table

| Flowing condition Rubber | I | II |
|---|---|---|
| Thickness of unvulcanized rubber (9) (mm) | 1.2 | 1.2 |
| Thickness of unvulcanized rubber (10) (mm) | 0.6 | 1.2 |

During the above vulcanizing process, rubber at the central part began to flow toward an end portion of steel cord, and drawing strength and pull strength were impressed upon the steel cord in the direction of end portion.

After vulcanization, materials in which the steel cord and rubber are united were taken out and the condition of rubber which penetrated into gaps of steel cord was examined, with the result as shown in Fig. 4b.

As Fig. 4b indicates, as compared with the conventional open cord C, steel cords A and B according to the present invention had excellent characteristic in penetrativity of rubber.

(Embodiment 3)

A metal wire (1) of 0.38mm$\phi$ diameter for steel cord was made by subjecting repeatedly a piano wire rod of 5.5mm$\phi$ diameter to heat treatment and drawing, with brass plating given in the course of process.

A cord of circular cross section and of single layer twist open construction, having 1 x 5 twist and the ratio between twist pitch P and diameter of metal wire d of P/d = 17.1 was made by intertwisting five strands of the above metal wire (1) in the same direction and at a twist pitch of 6.5.

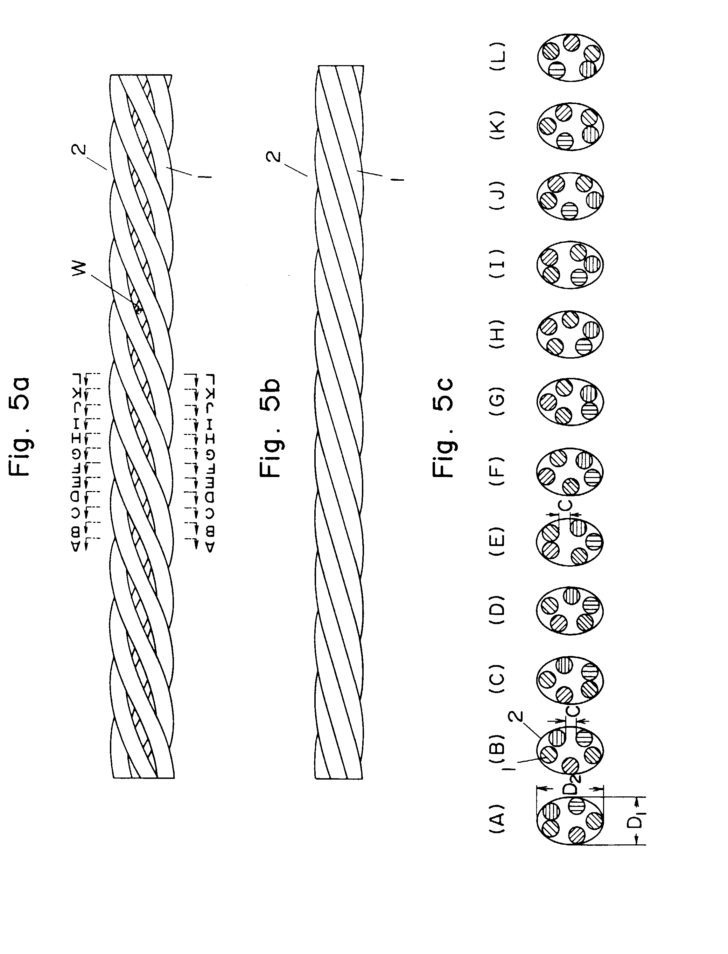

Then, the above open cord was made into a substantially elliptical shape as shown in Fig. 5 by rollers and thus a steel cord (2) having a ratio between a longer diameter $D_2$ and a shorter diameter $D_1$ of its circumcircle $D_2/D_1 = 1.1 \sim 1.3$ was made.

(Embodiment 4)

Similarly to Embodiment 3, a metal wire (3) of 0.30mm$\phi$ diameter for steel cord was made and a cord of circular cross section and of single layer twist open construction, having 1 x 4 twist and the ratio between twist pitch P and diameter of metal wire d P/d = 20 was made by intertwisting four strands of the above wire (3) in the same direction and at a twist pitch of 6.0.

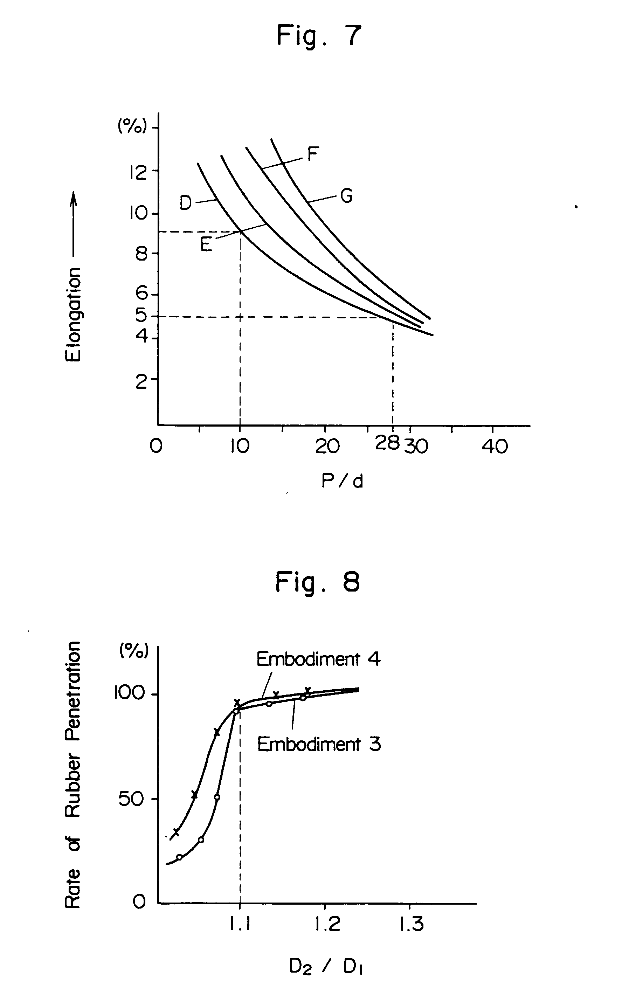

Then, the above open cord was made into a substantially elliptical shape as shown in Fig. 6 by rollers and thus a steel cord (4) having a ratio between a longer diameter $D_2$ and a shorter diameter $D_1$ of its circumcircle $D_2/D_1 = 1.2 \sim 1.4$ was made.

In the above Embodiments 3 and 4, if at least one gap C in the cross section of a cord is composed to be more than 2/100mm, it will be more effective.

Moreover, in the above Embodiments 3 and 4 the shape of perpendicular cross section of the cord was made substantially elliptical but it is all right that a true circular cross sectional shape appears partially in the lengthwise direction of a cord. In the embodiments, it is shown that at least one gap exists between metal wires but adjoining metal wires may contact with each other partially in the lengthwise direction of a cord.

Fig. 7 shows the relation between the twist pitch P in single layer twist of 1 x 3 (D), 1 x 4 (E), 1 x 5 (F) and 1 x 6 (G) and the diameter of metal wire d.

As is obvious from Fig. 7, in order to obtain 5% elongation rate, P/d = 28 is the largest and if it is reduced to less than 10, cord strength lowers extremely and the manufacturing cost increases.

Fig. 8 shows the rates of rubber penetration at rubber covering under the following vulcanizing conditions.

|  | Embodiment 3 | Embodiment 4 |
|---|---|---|
| External force (Kg) (Tension) | 8 | 6 |
| Temperature (ºC) | 150 | 150 |
| Time (minute) | 20 | 20 |
| Pressure (Kg/cm$^2$) | 25 | 25 |

As is obvious from Fig. 8, if the cross sectional shape of a steel cord is represented by the ratio between a longe diameter $D_2$ and a short diameter $D_1$ of $D_2/D_1 \geqq 1.1$, construction of the steel cord is stabilized and even if external force is loaded in the lengthwise direction of the cord in the form of drawing, there is no fear that the cord turns and gaps between metal wires are reduced. Thus, rubber penetration was effected smoothly.

A compound (6) of steel cord (2) and rubber (5) was formed by arranging a plurality of steel cords (2) obtained in Embodiment 1, for example, in a row in such a fashion that each long diameter axis L is positioned substantially on the same axial line horizontally and covering them with rubber material (5).

In the above compound (6), adjoining metal wires which were very close to each other at a long diameter end portions before vulcanization of rubber were separated from each other with a gap of more than 0.015mm therebetween after vulcanization due to flowing of rubber.

A tire (8) was composed by arranging a plurality of the above compounds (6) at the belt part (7) of a tire.

In the above embodiment, a steel cord was arranged at the belt part (7) but it is possible to arrange a steel cord at least at a part of the carcass part or the chafer part of a tire.

## Claims

1. A steel cord (2) for use in the reinforcement of rubber products such as tyres and conveyor belts

   - being composed of three to six metal wires (1) twisted together in a single layer twisting
   - and having a cross sectional area which is of substantially elliptical shape
   - and the ratio between the longer diameter (D2) and the shorter diameter (D1) of the elliptical shape is within a range of 1.1 to 2.2

   characterized in that

   - the steel cord (2) is twisted in such a way that the orientation of the elliptical shape is always the same in each cross section set along the center line of the steel cord
   - and that in all the said cross sections, the ones of metal wires near the ends of the longer diameter (D2) of the elliptical shape are positioned close to each other or contact with each other and the metal wires near the ends of the shorter diameter (D1) of the elliptical shape are separated from each other by at least one gap (C) to allow rubber to penetrate into the center of the steel cord.

2. A steel cord as defined in claim 1,
   wherein the gap (C) between adjacent metal wires (1) amounts to 0,2 - 1,0 of the diameter (d) of the metal wires.

3. A steel cord as defined in claim 1,
   wherein the adjacent metal wires (1) near the ends of the longer diamter (D2) of the elliptical shape are close to each other in a distance less than 0,1 of the diameter of the metal wires.

4. A steel cord as defined in claim 1,

   wherein the adjacent metal wires (1) positioned upwardly and downwardly of the longer diameter (D2) of the elliptical shape form a long hysteresis loop
   and the gaps are positioned at substantially regular intervalls in the lengthwise direction of the steel cord.

5. A steel cord as defined in claim 1,
   wherein the ratio between the twist pitch of the cord (2) and the diameter (d) of the metal wires (1) is within a range

6

of 10 to 28.

6. A compound of a plurality of steel cords defined in claim 1 covered with rubber,
wherein adjacent ones of said metal wires of each of said steel cords are separated from each other by a distance which is at least four percent of the diameter of said metal wires.

7. A tire having a compound of a plurality of steel cords defined in claim 1 or claim 6 arranged in a row with an interval so that each longer diameter of the elliptical shape positioned on the same center line and covered with a rubber sheet, embedded at least at a belt part thereof.

**Patentansprüche**

1. Stahlseil für die Verstärkung von elastomeren Erzeugnissen, wie z.B. Reifen oder Förderbänder,

- bestehend aus drei bis sechs Metalldrähten (1), die einlagig miteinander verdrillt sind,
- wobei das Stahlseil eine elliptische Querschnittsform aufweist
- und das Verhältnis des längeren Durchmessers (D2) zum kürzeren Durchmesser (D1) der elliptischen Querschnittsform zwischen 1,1 und 2,2 liegt,

dadurch gekennzeichnet,

- daß das Stahlseil (2) in der Weise hergestellt ist, daß die Ausrichtung der elliptischen Querschnittsform immer gleichbleibend ist und zwar in jedem Querschnitt über die gesamte Länge des Stahlseils,
- und daß in allen Querschnitten die Metalldrähte in den Endbereichen des längeren Durchmessers (D2) der elliptischen Querschnittsform näher aneinandergerückt oder in Kontakt miteinander sind und daß die Metalldrähte in den Endbereichen des kürzeren Durchmessers (D1) der elliptischen Querschnittsform voneinander beabstandet sind derart, daß dort zumindest ein Spalt (C) vorhanden ist durch den die Gummimischung in das innere Zentrum des Stahlseils eindringen kann.

2. Stahlseil nach Anspruch 1,
dadurch gekennzeichnet,

- daß der Spalt (C) zwischen benachbarten Metalldrähten (1) eine Größe von 0,2 bis 1,0 des Durchmessers (d) der Metalldrähte aufweist.

3. Stahlseil nach Anspruch 1,
dadurch gekennzeichnet,

- daß die benachbarten Metalldrähte (1) in den Endbereichen des längeren Durchmessers (D2) der elliptischen Querschnittsform bis auf einen Abstand aneinandergerückt sind, der kleiner als 0,1 des Durchmessers der Metalldrähte ist.

4. Stahlseil nach Anspruch 1,
dadurch gekennzeichnet,

- daß die benachbarten Metalldrähte (1) aufwärts und abwärts zum längeren Durchmesser (D2) der elliptischen Querschnittsform positioniert sind derart, daß sie die Form einer langgezogenen Hystereseschleife aufweisen,
- und daß die gebildeten Spalte im wesentlichen in rechtwinkeligen Intervallen zueinander in Längsrichtung des Stahlseils angeordnet sind.

5. Stahlseil nach Anspruch 1,
dadurch gekennzeichnet,

- daß das Verhältnis der Windungshöhe einer Drillung des Stahlseils (2) zu dem Durchmesser (d) der Metalldrähte (1) zwischen 10 und 28 liegt.

6. Mehrere Stahlseile nach Anspruch 1,

die in eine Gummimischung eingebettet sind,
<u>dadurch gekennzeichnet,</u>

- daß die benachbarten Metalldrähte jedes der Stahlseile voneinander einen Abstand haben, der mindestens 4 % des Durchmessers der Metalldrähte beträgt.

7. Reifen mit mehreren Stahlseilen nach Anspruch 1 oder Anspruch 6,
<u>dadurch gekennzeichnet,</u>

- daß die Stahlseile parallel in einem Abstand angeordnet sind derart, daß die längeren Durchmesser der elliptischen Querschnittsformen in einer Ebene liegen,
- und daß die Anordnung mit einer Gummilage bedeckt und zumindest im Gürtelbereich des Reifens eingebettet ist.

**Revendications**

1. Un câble en acier (2) destiné à être utilisé pour le renforcement de produits en élastomère tel que les bandages pneumatiques et les courroies de convoyeur, composé de trois à six fils métalliques (1) tordus ensemble par une torsion à simple couche,

- et présentant une surface de section transversale dont la forme est sensiblement elliptique,
- le rapport entre le plus grand diamètre (D2) et le plus petit diamètre (D1) de la forme elliptique étant compris entre 1,1 et 2,2,

caractérisé en ce que

- le câble en acier (2) est tordu de telle façon que l'orientation de la forme elliptique soit toujours la même dans chaque section transversale placée le long de la ligne centrale du câble en acier,
- et en ce que dans toutes lesdites sections transversales, les fils métalliques proches des extrémités du plus grand diamètre (D2) de la forme elliptique sont positionnés à proximité l'un de l'autre ou en contact l'un avec l'autre tandis que les fils métalliques proches des extrémités du plus petit diamètre (D1) de la forme elliptique sont séparées l'une de l'autre d'au moins un intervalle (C) afin de permettre au caoutchouc ou à l'élastomère de pénétrer au centre du câble métallique.

2. Un câble métallique tel que défini à la revendication 1, dans lequel l'intervalle (C) entre des fils métalliques adjacents (1) est compris entre 0,2 et une fois le diamètre (d) des fils métalliques.

3. Un câble en acier tel que défini à la revendication 1, dans lequel les fils métalliques adjacents (1) au voisinage des extrémités du diamètre le plus grand (D2) de la forme elliptique sont rapprochés les uns des autres à une distance inférieure à 0,1 fois le diamètre des fils métalliques.

4. Un câble en acier tel que défini à la revendication 1, dans lequel les fils métalliques adjacents (1) positionnés en haut et en bas du plus grand diamètre (D2) de la forme elliptique forment une boucle à hystérésis longue, et dans lequel les petits intervalles sont positionnés à des intervalles sensiblement réguliers dans la direction longitudinale du câble en acier.

5. Un câble en acier tel que défini à la revendication 1, dans lequel le rapport entre le pas de torsion du câble (2) et le diamètre (d) des fils métalliques (1) est compris entre 10 et 28.

6. Un composé d'une pluralité de câbles métalliques tels que définis à la revendication 1, et recouvert d'élastomère ou de caoutchouc, dans lequel parmi des fils métalliques ceux qui sont adjacents de chacune desdits câbles en acier, sont séparés l'un de l'autre d'une distance qui est au moins égale à 4% du diamètre desdits fils métalliques.

7. Un bandage pneumatique présentant un composé constitué d'une pluralité de câbles en acier tels que définis à la revendication 1 ou à la revendication 6, et agencé selon une rangée avec un intervalle de telle façon que chaque diamètre plus long de la forme elliptique soit positionné sur la même ligne médiane et soit recouvert d'une feuille en caoutchouc ou en élastomère, tout en étant noyé au moins à l'une de ses parties formant courroie.

EP 0 363 893 B1

Fig. 1a

Fig. 1b

Fig. 1c

Fig. 2

Fig. 3a

Fig. 3b

Fig. 6a

Fig. 6b

# Fig. 4a

# Fig. 4b

Fig. 5a

Fig. 5b

Fig. 5c

(A) (B) (C) (D) (E) (F) (G) (H) (I) (J) (K) (L)

EP 0 363 893 B1

## Fig. 7

## Fig. 8

13

## Fig. 9a

## Fig. 9b

## Fig. 10a

## Fig. 10b